# EUROPÄISCHE PATENTSCHRIFT

(11) **EP 2 272 153 B1**
(45) Veröffentlichungstag und Bekanntmachung des Hinweises auf die Patenterteilung: **21.05.2014**
(21) Anmeldenummer: 08873644.2
(22) Anmeldetag: 18.12.2008
(51) Int. Cl.: H02K 5/14

(54) **ELEKTROWERKZEUGMASCHINE**
ELECTRIC MACHINE TOOL
MACHINE-OUTIL ÉLECTRIQUE

(30) Priorität: 26.03.2008 DE 102008000828
(43) Veröffentlichungstag der Anmeldung: 12.01.2011
(73) Patentinhaber: Robert Bosch GmbH, 70442 Stuttgart (DE)
(72) Erfinder: MAUTE, Joerg, 71069 Sindelfingen (DE); ESENWEIN, Florian, 73066 Uhingen-Holzhausen (DE); HOFMANN, Albrecht, 71144 Steinenbronn (DE); SCHOMISCH, Thomas, 70794 Filderstadt (DE)
(86) Internationale Anmeldenummer: PCT/EP2008/067879
(87) Internationale Veröffentlichungsnummer: WO 2009/118070

(56) Entgegenhaltungen:
- CA-A1- 1 247 687
- DE-A1- 2 424 788
- DE-A1- 19 749 407
- US-A- 4 513 214
- US-A- 4 677 333

## Beschreibung

### Stand der Technik

Die vorliegende Erfindung betrifft eine Elektrowerkzeugmaschine mit einem Kommutatormotor, der eine in einem Motorgehäuse drehbar angeordnete Motorwelle mit einem Kommutator aufweist, dem mindestens zwei Kommutatorbürsten zugeordnet sind, die über mindestens eine am Motorgehäuse vorgesehene Bürstenabdeckung zugänglich sind. Eine derartige Electrowerkzeugmaschine ist in den Dokumenten CA 1247627 A1, US 4677333 A und US 4513214 A beschrieben.

Die DE 36 35 067 A1 beschreibt eine derartige Elektrowerkzeugmaschine. Diese hat zwei am Kommutator einander diametral gegenüberliegende Kommutatorbürsten, die in zugeordneten Bürstenhaltern axial verschieblich geführt sind. Jeder Bürstenhalter ist über eine am Motorgehäuse vorgesehene Gehäuseöffnung zugänglich, in der jeweils eine Bürstenabdeckung angeordnet ist. In einer Betriebsposition der Bürstenabdeckungen ist jede Bürstenabdeckung durch eine zugeordnete Schraubverbindung zum Motorgehäuse verschlossen, sodass die Kommutatorbürsten abgedeckt sind. Zum Bürstenwechsel müssen die Schraubverbindungen der Bürstenabdeckungen gelöst werden, um die Abdeckungen zu öffnen bzw. zu demontieren und somit einen Zugriff auf die Bürsten zu ermöglichen.

Nachteilig am Stand der Technik ist, dass bei derartigen Elektrowerkzeugmaschinen die Befestigung der Bürstenabdeckungen am Motorgehäuse durch Schraubverbindungen erfolgt, wobei für jede Schraubverbindung ein entsprechender Schraubdomen im bzw. am Motorgehäuse vorzusehen ist. Dies führt bei einer stetig zunehmenden Leistungsdichte und Kompaktheit gebräuchlicher E-lektrowerkzeugmaschinen aufgrund des jeweils verfügbaren Bauraums zu Platzproblemen. Des Weiteren muss beim Bürstenwechsel für jede auszutauschende Kommutatorbürste jeweils eine Schraubverbindung gelöst werden, was den Bürstenwechsel umständlich und aufwendig gestaltet.

### Offenbarung der Erfindung

Eine Aufgabe der Erfindung ist es daher, eine neue Elektrowerkzeugmaschine und eine neue Bürstenabdeckung bereit zu stellen, die einen einfachen, sicheren und schnellen Zugang zu den Kommutatorbürsten der Elektrowerkzeugmaschine ermöglichen.

Dieses Problem wird durch eine Elektrowerkzeugmaschine mit einem Kommutatormotor mit den Merkmalen des Anspruchs 1 gelöst.

Die Erfindung ermöglicht somit ein schnelles und einfaches Öffnen und Schließen der Bürstenabdeckungen durch ein Lösen bzw. Wiederherstellen der lösbaren Verbindung zwischen dem Abdeckelement und dem Motorgehäuse.

Bei der Elektrowerkzeugmaschine ist bevorzugt ein Federglied vorgesehen, das dazu dient, die Bürstenabdeckung in Richtung einer Wartungsposition vorzuspannen, in der ein Zugriff auf die Kommutatorbürsten möglich ist.

Somit öffnet sich die Bürstenabdeckung beim Lösen der lösbaren Verbindung zwischen dem Abdeckelement und dem Motorgehäuse selbsttätig.

Gemäß einer Ausführungsform ist das Abdeckelement eine topfförmige Gehäuseabdeckung. Hierbei ist die Bürstenabdeckung bevorzugt durch einen Formschluss zwischen dem Abdeckelement und einem ersten Endbereich der Bürstenabdeckung in der Betriebsposition am Motorgehäuse fixiert.

Die Erfindung ermöglicht somit durch einen Verzicht auf eine gebräuchliche Schraubverbindung zur Fixierung der Bürstenabdeckung eine Platz sparende Realisierung der Bürstenabdeckung.

Das Motorgehäuse weist bevorzugt ein Eingreifelement auf, in das ein zweiter Endbereich der Bürstenabdeckung lösbar eingreift. Alternativ hierzu ist die Bürstenabdeckung am zweiten Endbereich pivotierbar am Motorgehäuse befestigt.

Somit kann ein unbeabsichtigtes Ausrutschen der Bürstenabdeckung aus dem Motorgehäuse beim Lösen der lösbaren Verbindung zwischen dem Abdeckelement und dem Motorgehäuse wirksam verhindert werden.

Gemäß einer Ausführungsform weist das Abdeckelement mindestens ein Halteglied auf, das in eine am Motorgehäuse vorgesehene Haltevorrichtung eingreift. Das Halteglied und die Haltevorrichtung bilden einen Endanschlag, der beim Lösen der lösbaren Verbindung zwischen Abdeckelement und Motorgehäuse eine Bewegung des Abdeckelements zur Freigabe der Bürstenabdeckung limitiert.

Somit kann ein unbeabsichtigtes Entfernen des Abdeckelements von der Elektrowerkzeugmaschine bei einem Lösen der lösbaren Verbindung zwischen dem Abdeckelement und dem Motorgehäuse wirksam verhindert werden.

Bei der Elektrowerkzeugmaschine ist bevorzugt ein Federelement vorgesehen, das das Abdeckelement in Richtung des Endanschlags vorspannt.

Eine Verschiebung des Abdeckelements zur Freigabe der Bürstenabdeckung wird somit vereinfacht.

Gemäß einer Ausführungsform weist das Halteglied mindestens eine Rastnase auf und die Haltevorrichtung ist ein kragenförmiger Anschlag.

Das Halteglied und die Haltevorrichtung können somit auf einfache Art und Weise realisiert werden.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
- Fig. 1: eine perspektivische Explosionsdarstellung einer Winkelschleifmaschine gemäß der Erfindung;
- Fig. 2: eine Schnittansicht eines Ausschnitts der Winkelschleifmaschine von Fig. 1;
- Fig. 3: eine Schnittansicht des Ausschnitts der Winkelschleifmaschine von Fig. 2 beim Lösen der lösbaren Verbindung zwischen dem Abdeckelement und dem Motorgehäuse;
- Fig. 4: eine Schnittansicht des Ausschnitts der Winkelschleifmaschine von Fig. 2 beim Öffnen einer Bürstenabdeckung; und
- Fig. 5: eine Schnittansicht des Ausschnitts der Winkelschleifmaschine von Fig. 2 beim Bürstenwechsel.

### Beschreibung der Ausführungsbeispiele

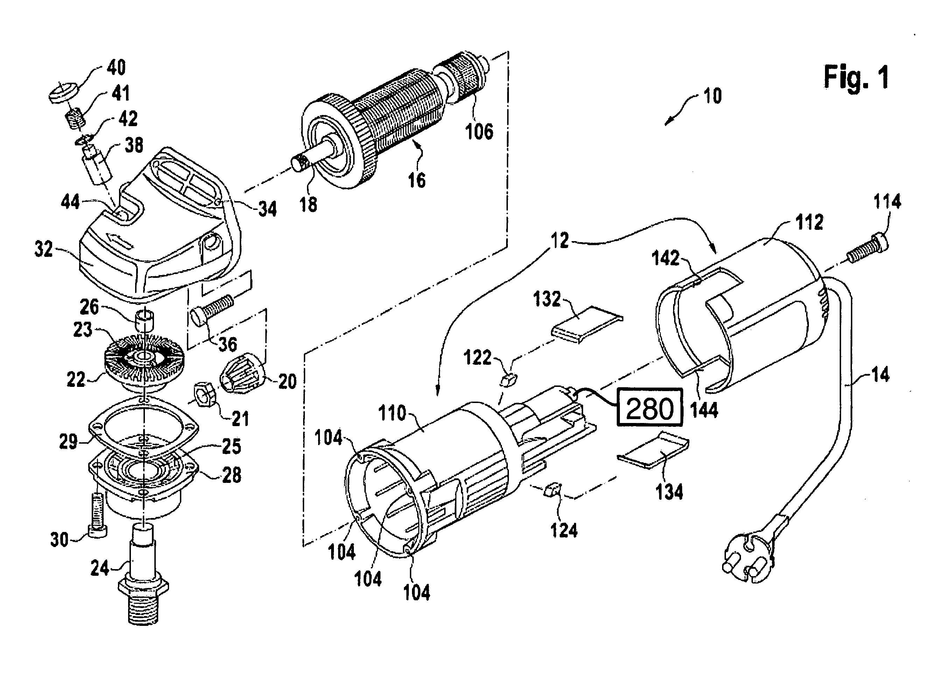

Fig. 1 zeigt eine in Topfbauweise aufgebaute Winkelschleifmaschine 10 mit einem länglichen, topfförmigen Gehäuse 12 gemäß einer Ausführungsform der Erfindung. In das Gehäuse 12 ist u. a. ein Rotor 16 mit einer Motorwelle 18 einsetzbar, auf die axial ein Kegelrad 20 mittels einer Mutter 21 aufschraubbar ist.

Das Kegelrad 20 ist zum kämmenden Eingriff in die Verzahnung eines Tellerrads 22 vorgesehen, das auf seiner Verzahnungsseite Stopp-Ausnehmungen 23 trägt, die als eingeprägte Vertiefungen ausgestaltet sind.

Das Tellerrad 22 sitzt drehfest auf einer Antriebswelle 24, die rechtwinklig zur Motorwelle 18 verläuft. Ein axialer Endbereich der Antriebswelle 24 ist von einer Lagerhülse 26 ummantelt, die in einem zugeordneten Lagerauge eines Getriebegehäuses 32 angeordnet ist. Ihr anderer axialer Endbereich ist in einem Kugellager 25 gelagert, das in einem Lagerflansch 28 sitzt. Dieser ist mittels Flanschschrauben 30 an die Unterseite des Getriebegehäuses 32 geschraubt, wobei zwischen dem Getriebegehäuse 32 und dem Lagerflansch 28 eine Ausgleichscheibe für das Getriebespiel 29 vorgesehen ist.

An dem Getriebegehäuse 32 ist ein schräg geführter Rastbolzen 38 angeordnet, der mit einem über eine Druckfeder 41 vorgespannten Betätigungsknopf 40 verbunden ist. Der Rastbolzen 38 ist federnd axial verstellbar in einer Spindellock-Bohrung des Getriebegehäuses 32 verschiebbar geführt und kann z.B. mittels eines O-Rings 42 gegen Verlieren gesichert werden. Bei einer Betätigung des Betätigungsknopfs 40 wird der Rastbolzen 38 in Richtung des Tellerrads 22 verschoben und greift in dessen Stopp-Ausnehmungen 23 ein, wobei das Tellerrad 22 drehfest arretiert wird.

Das Getriebegehäuse 32 ist mit Motorflansch-Schrauben 36 mit dem Gehäuse 12 verbindbar. Die Schrauben 36 treten durch entsprechende Flansch-SchraubBohrungen 34 mit Flansch-Bohrungsaugen des Getriebegehäuses 32 durch und greifen in zugeordnete Schraubbohrungen 104 des Gehäuses 12 ein.

Gemäß einer Ausführungsform der Erfindung ist das längliche, topfförmige Gehäuse 12 der Winkelschleifmaschine 10 zweiteilig ausgeführt und weist ein Gehäuseelement 110 und ein Abdeckelement 112 auf. Das Gehäuseelement 110 umschließt den Motor der Winkelschleifmaschine 10 zumindest teilweise und wird deshalb im Kontext der vorliegenden Erfindung auch als Motorgehäuse bezeichnet. Das Abdeckelement 112 ist bevorzugt eine topfförmige Gehäuseabdeckung, aus deren geschlossenem Ende eine elektrische Anschlussleitung 14 austritt. Die topfförmige Gehäuseabdeckung 112 ist auf das Motorgehäuse 110 aufschiebbar, um dieses zumindest teilweise zu ummanteln. Hierbei ist die Abdeckung 112 mittels einer Befestigungsschraube 114 lösbar am Motorgehäuse 110 befestigbar.

Am Außenumfang der Gehäuseabdeckung 112 sind Aussparungen 142, 144 vorgesehen, die zumindest zur teilweisen Aufnahme von Bürstenabdeckungen 132, 134 vorgesehen sind. Diese dienen zur Abdeckung von Kommutatorbürsten 122, 124, die im Betrieb der Winkelschleifmaschine 10 mit einem am Rotor 16 angeordneten Kommutator 106 zusammenwirken. Da die Funktionsweise der Winkelschleifmaschine 10 mit dem Kommutator 106 aus dem Stand der Technik hinreichend bekannt ist, wird hier auf eine detaillierte Beschreibung verzichtet.

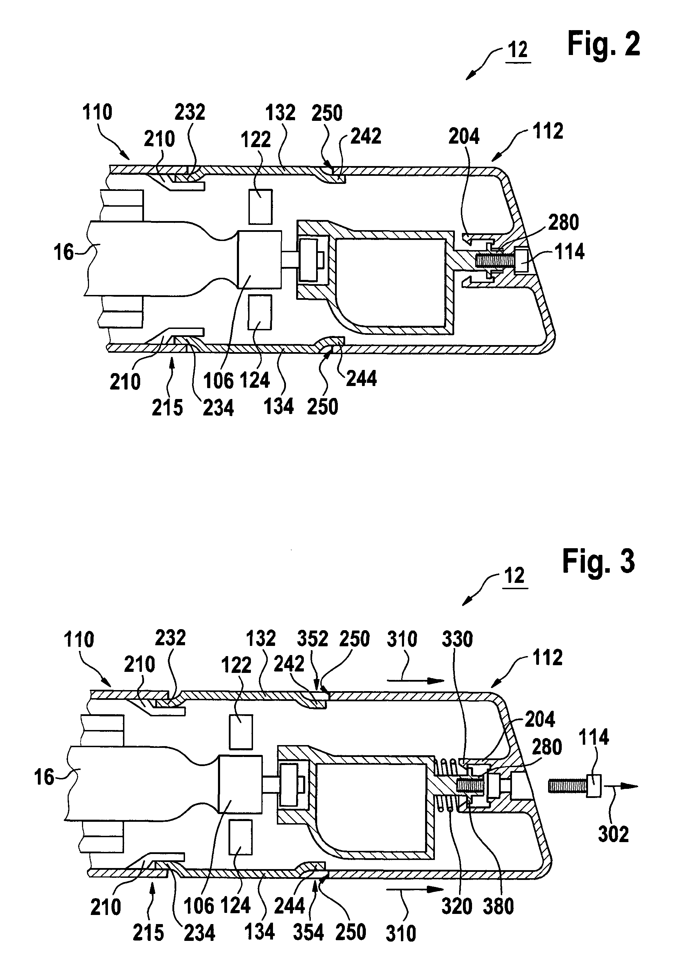

Bei der Montage der Winkelschleifmaschine 10 werden die Bürstenabdeckungen 132, 134 zwischen dem Motorgehäuse 110 und der Gehäuseabdeckung 112 angeordnet und die Gehäuseabdeckung 112 wird mit der Schraube 114 am Motorgehäuse 110 befestigt. Hierbei wird zwischen der Gehäuseabdeckung 112 und einem der Gehäuseabdeckung 112 zugewandten Endbereich der Bürstenabdeckung 132 bzw. 134 ein Formschluss erzeugt, sodass die Bürstenabdeckungen 132, 134 wie unten stehend bei Fig. 2 beschrieben in einer Betriebsposition am Motorgehäuse 110 fixiert sind. Die Gehäuseabdeckung 112 schränkt somit den letzten Freiheitsgrad der Bürstenabdeckungen 132, 134 hinsichtlich einer Bewegung der Bürstenabdeckungen 132, 134 relativ zum Motorgehäuse 110 ein.

Es wird darauf hingewiesen, dass die oben beschriebene topfförmige Bauweise der Winkelschleifmaschine 10 lediglich illustrativen Zwecken dient und das auch andere Bauweisen für die Winkelschleifmaschine 10 möglich sind. Beispielsweise kann das Gehäuse 12 der Winkelschleifmaschine 10 schalenförmig aufgebaut sein und aus mindestens einem ersten und einem zweiten Schalenelement bestehen, zwischen denen die Bürstenabdeckungen 132, 134 angeordnet sind. Hierbei kann z.B. das erste Schalenelement fest mit dem Motor der Winkelschleifmaschine 10 verbunden sein und das zweite Schalenelement ist lösbar mit dem ersten Schalenelement verbunden. Alternativ hierzu kann das Motorgehäuse 110 wie in Fig. 1 gezeigt topfförmig ausgebildet sein, und die Gehäuseabdeckung 112 besteht aus einem ersten und einem zweiten Schalenelement.

Fig. 2 zeigt einen Ausschnitt des länglichen Gehäuses 12 der Winkelschleifmaschine 10 von Fig. 1 in der Betriebsposition, in der die Bürstenabdeckungen 132, 134 zwischen der Gehäuseabdeckung 112 und dem Motorgehäuse 110 derart fixiert sind, dass das Gehäuse 12 geschlossen ist. Die Bürstenabdeckungen 132, 134 decken hierbei die Kommutatorbürsten 122, 124 ab, so dass diese nicht von außen zugänglich sind.

Gemäß einer bevorzugten Ausführungsform der Erfindung haben die Bürstenabdeckungen 132, 134 Führungs- bzw. Halteelemente 232, 234 und 242, 244, die zungenförmig ausgebildet sind. Die Führungs- und Halteelemente 242, 244 sind an einem ersten Endbereich der Bürstenabdeckungen 132 bzw. 134 vorgesehen und wirken mit der Gehäuseabdeckung 112 zusammen. Die Führungs- bzw. Halteelemente 232, 234 sind an einem zweiten Endbereich der Bürstenabdeckungen 132 bzw. 134 vorgesehen und wirken mit dem Motorgehäuse 110 zusammen.

Wie aus Fig. 2 ersichtlich, greifen die Führungs- bzw. Halteelemente 232, 234 in zugeordnete Eingreifelemente 210 ein, die an einem der Gehäuseabdeckung 112 zugewandten Bereich 215 des Motorgehäuses 110 vorgesehen sind. Die Eingreifelemente 210 sind bevorzugt nuten- oder spaltförmig ausgebildet, sodass die Führungs- bzw. Halteelemente 232, 234 lösbar in diese einschiebbar sind.

Die Verbindung zwischen den Führungs- bzw. Halteelementen 232, 234 und den Eingreifelementen 210 kann reibungsfrei erfolgen, sodass ein einfaches und kraftfreies Entnehmen der Führungs- bzw. Halteelemente 232, 234 aus den Eingreifelementen 210 möglich ist. Alternativ hierzu können die Führungs- bzw. Halteelemente 232, 234 zumindest teilweise eine Dicke aufweisen, die größer ist als die Breite der Nut der nutenförmigen Eingreifelemente 210, sodass zum Einführen der Führungs- bzw. Halteelemente 232, 234 in die Eingreifelemente 210 eine vorgegebene Kraft erforderlich ist. Hierbei erfolgt ein Kraftschluss zwischen den Führungs- bzw. Halteelementen 232, 234 und den Eingreifelementen 210, der beim Öffnen des Gehäuses 12 ein Ausrutschen der Führungs- bzw. Halteelemente 232, 234 aus den Eingreifelementen 210 verhindert.

Des Weiteren können die zungenförmigen Führungs- bzw. Halteelemente 232, 234 pivotierbar an den Eingreifelementen 210 befestigt sein, beispielsweise mittels eines Scharniers oder eines im Motorgehäuse 110 drehbar gelagerten Gelenks, z.B. eines Halbkugelgelenks, das im Motorgehäuse 110 durch Einklipsen montierbar ist. Alternativ hierzu können das Motorgehäuse 110 und die Bürstenabdeckungen 132, 134 einstückig ausgeführt und über ein Filmscharnier miteinander verbunden sein.

Wie Fig. 2 zeigt, ist die Gehäuseabdeckung 112 in der Betriebsposition mittels der Schraube 114 an dem Motorgehäuse 110 befestigt, wobei zwischen einem freien Ende 250 der Gehäuseabdeckung 112 und den Führungs- bzw. Halteelementen 242, 244 ein Formschluss bewirkt wird, durch den die Bürstenabdeckungen 132, 134 in der Betriebsposition am Motorgehäuse 110 fixiert sind. Die Gehäuseabdeckung 112 weist mindestens ein Halteglied 204 auf, das in eine am Motorgehäuse 110 vorgesehene Haltevorrichtung 280 eingreift.

Fig. 3 zeigt den Ausschnitt des länglichen Gehäuses 12 der Winkelschleifmaschine 10 von Fig. 2 beim Lösen der lösbaren Verbindung zwischen der Gehäuseabdeckung 112 und dem Motorgehäuse 110. Hierbei kann die Gehäuseabdeckung 112 nach einem Lösen der Schraube 114, wie mit einem Pfeil 302 angedeutet, zumindest teilweise in Richtung eines Pfeils 310 von dem Motorgehäuse 110 abgezogen werden.

Das Abziehen der Gehäuseabdeckung 112 von dem Motorgehäuse 110 wird erfindungsgemäß von einem Federelement 320, z.B. einer Spiralfeder, unterstützt. Dieses ist in Fig. 3 zwischen dem Motorgehäuse 110 und dem Halteglied 204 angeordnet, z.B. an einem entsprechenden am Motorgehäuse 110 vorgesehenen Schraubdomen, und spannt die Gehäuseabdeckung 112 in Richtung eines Endanschlags vor, wie unten stehend beschrieben.

Gemäß einer bevorzugten Ausführungsform der Erfindung wird eine Bewegung der Gehäuseabdeckung 112 relativ zum Motorgehäuse 110 derart limitiert, dass lediglich der Formschluss zwischen dieser und den Bürstenabdeckungen 132, 134 gelöst wird, um ein Öffnen und/oder Abnehmen der Bürstenabdeckungen 132, 134 zu ermöglichen, z.B. zum Austausch der Kommutatorbürsten 122, 124.

Hierzu bilden das Halteglied 204 und die Haltevorrichtung 280 den oben erwähnten Endanschlag. Beispielsweise hat das Halteglied 204 Rastnasen 330, welche in der Position des Endanschlags gegen einen kragenförmigen Anschlag 380 an der Haltevorrichtung 280 anliegen.

Durch die Limitierung der Bewegung der Gehäuseabdeckung 112 wird erreicht, dass diese z.B. beim Austausch der Kommutatorbürsten 122, 124 nicht vollständig vom Motorgehäuse 110 abziehbar ist, sondern lediglich bis zu der Endanschlagsposition, in der ein Zugriff auf die Kommutatorbürsten 122, 124 über die Bürstenabdeckungen 132, 134 möglich ist. Ein vollständiges Abziehen der Gehäuseabdeckung 112 vom Motorgehäuse 110 ist vorzugsweise durch Überrasten möglich.

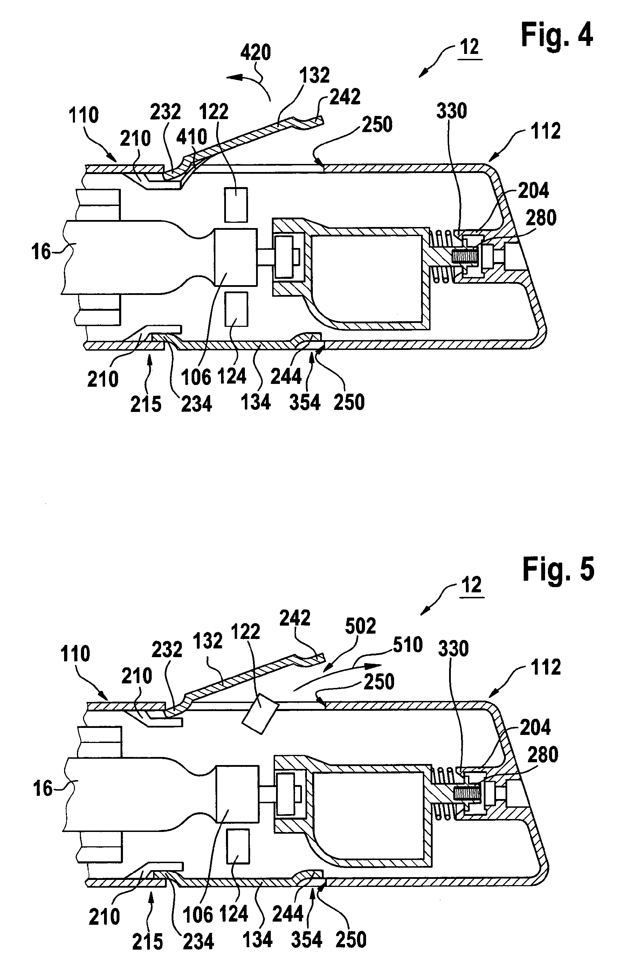

Wie aus Fig. 3 ersichtlich, entstehen durch ein Lösen der lösbaren Verbindung zwischen der Gehäuseabdeckung 112 und dem Motorgehäuse 110 und somit einem Lösen des Formschlusses zwischen der Gehäuseabdeckung 112 und den Bürstenabdeckungen 132, 134 spaltförmige Öffnungen 352, 354. Diese ermöglichen das Öffnen und/oder Abnehmen der Bürstenabdeckungen 132, 134, wie unten bei Fig. 4 beschrieben.

Fig. 4 zeigt den Ausschnitt des länglichen Gehäuses 12 der Winkelschleifmaschine 10 von Fig. 3 beim Öffnen und/oder Abnehmen der Bürstenabdeckungen 132, 134. Zur Vereinfachung der Darstellung und Beschreibung wird nachfolgend nur das Öffnen der Bürstenabdeckung 132 in Richtung eines Pfeils 420 beschrieben. Hierzu kann durch die beim Abziehen der Gehäuseabdeckung 112 entstehende, spaltförmige Öffnung 352 (Fig. 2) ein geeignetes Werkzeug, z.B. ein Schraubendreher, zwischen Gehäuseabdeckung 112 und Bürstenabdeckung 132 geschoben werden, um diese auszuhebeln.

Das Aushebeln wird erfindungsgemäß von einem Federglied 410, z.B. einer Feder oder einem biegebalkenähnlichen Element, unterstützt, das die Bürstenabdeckung 132 in Richtung der Wartungsposition vorspannt. Alternativ hierzu kann das Federglied 410 derart ausgeführt sein, dass auf die Verwendung des geeigneten Werkzeugs verzichtet werden kann, d.h. dass die Kraft des Federglieds 410 zum Aushebeln der Bürstenabdeckung 132 ausreicht.

Fig. 5 zeigt den Ausschnitt des länglichen Gehäuses 12 der Winkelschleifmaschine 10 von Fig. 4 nach dem Öffnen der Bürstenabdeckung 132. Wie aus Fig. 5 ersichtlich, entsteht durch das Öffnen der Bürstenabdeckung 132 eine Öffnung 502 zwischen der Bürstenabdeckung 132 und der Gehäuseabdeckung 112, durch die die Kommutatorbürste 122 in Richtung eines Pfeils 510 entnehmbar ist.

Ein Ersetzen der Kommutatorbürste 132 kann nun durch Durchführung der oben beschriebenen Schritte in umgekehrter Reihenfolge erfolgen, d.h. Einsetzen einer neuen Kommutatorbürste, Schließen der Bürstenabdeckung 132, Aufschieben der Gehäuseabdeckung 112 auf das Motorgehäuse 110 und Befestigen der Gehäuseabdeckung 112 am Motorgehäuse 110 mit der Schraube 114 (Fig. 2).

## Patentansprüche

1. Elektrowerkzeugmaschine mit einem Kommutatormotor, der eine in einem Motorgehäuse (110) drehbar angeordnete Motorwelle (18) mit einem Kommutator (106) aufweist, dem mindestens zwei Kommutatorbürsten (122, 124) zugeordnet sind, die über mindestens eine am Motorgehäuse (110) vorgesehene Bürstenabdeckung (132, 134) zugänglich sind, **dadurch gekennzeichnet, dass** ein Abdeckelement (112) das Motorgehäuse (110) zumindest teilweise ummantelt und über eine lösbare Verbindung am Motorgehäuse (110) befestigt ist, wobei das Abdeckelement (112) mindestens eine Aussparung (142, 144) aufweist, in der die Bürstenabdeckung (132, 134) angeordnet ist, wobei die Bürstenabdeckung (132, 134) durch die Befestigung des Abdeckelements (112) am Motorgehäuse (110) in einer Betriebsposition am Motorgehäuse (110) fixiert ist, in der die Kommutatorbürsten (122, 124) von der Bürstenabdeckung (132, 134) derart abgedeckt sind, dass die Kommutatorbürsten (122, 124) nicht von außen zugänglich sind.

2. Elektrowerkzeugmaschine nach Anspruch 1, **dadurch gekennzeichnet, dass** ein Federglied (410) vorgesehen ist, das dazu dient, die Bürstenabdeckung (132, 134) in Richtung einer Wartungsposition vorzuspannen, in der ein Zugriff auf die Kommutatorbürsten (122, 124) möglich ist.

3. Elektrowerkzeugmaschine nach Anspruch 1 oder 2, **dadurch gekennzeichnet, dass** das Abdeckelement (112) eine topfförmige Gehäuseabdeckung ist.

4. Elektrowerkzeugmaschine nach einem der vorhergehenden Ansprüche, **dadurch gekennzeichnet, dass** die Bürstenabdeckung (132, 134) durch einen Formschluss zwischen dem Abdeckelement (112) und einem ersten Endbereich der Bürstenabdeckung (132, 134) in der Betriebsposition am Motorgehäuse (110) fixiert ist.

5. Elektrowerkzeugmaschine nach Anspruch 4, **dadurch gekennzeichnet, dass** das Motorgehäuse (110) ein Eingreifelement (210) aufweist, in das ein zweiter Endbereich der Bürstenabdeckung (132, 134) lösbar eingreift.

6. Elektrowerkzeugmaschine nach Anspruch 4, **dadurch gekennzeichnet, dass** die Bürstenabdeckung (132, 134) am zweiten Endbereich pivotierbar am Motorgehäuse (110) befestigt ist.

7. Elektrowerkzeugmaschine nach einem der vorhergehenden Ansprüche, **dadurch gekennzeichnet, dass** das Abdeckelement (112) mindestens ein Halteglied (204) aufweist, das in eine am Motorgehäuse (110) vorgesehene Haltevorrichtung (280) eingreift, wobei das Halteglied (204) und die Haltevorrichtung (280) einen Endanschlag bilden, der beim Lösen der lösbaren Verbindung zwischen Abdeckelement (112) und Motorgehäuse (110) eine Bewegung des Abdeckelements (112) zur Freigabe der Bürstenabdeckung (132, 134) limitiert.

8. Elektrowerkzeugmaschine nach Anspruch 7, **dadurch gekennzeichnet, dass** ein Federelement (320) vorgesehen ist, das das Abdeckelement (112) in Richtung des Endanschlags vorspannt.

9. Elektrowerkzeugmaschine nach Anspruch 7 oder 8, **dadurch gekennzeichnet, dass** das Halteglied (204) mindestens eine Rastnase (330) aufweist und die Haltevorrichtung (280) ein kragenförmiger Anschlag ist.

## Claims

1. Electric machine tool, with a commutator motor which has a motor shaft (18) arranged rotatably in a motor housing (110) and having a commutator (106) which is assigned at least two commutator brushes (122, 124) which are accessible via at least one brush cover (132, 134) provided on the motor housing (110), **characterized in that** a covering element (112) at least partially encases the motor housing (110) and is fastened to the motor housing (110) via a releasable connection, the covering element (112) having at least one clearance (142, 144) in which the brush cover (132, 134) is arranged, and, by the covering element (112) being fastened to the motor housing (110), the brush cover (132, 134) being fixed to the motor housing (110) in an operating position in which the commutator brushes (122, 124) are covered with the brush cover (132, 134) in such a way that the commutator brushes (122, 124) are not accessible from outside.

2. Electric machine tool according to Claim 1, **characterized in that** a spring member (410) is provided, which serves for prestressing the brush cover (132, 134) in the direction of a stand-by position in which access to the commutator brushes (122, 124) is possible.

3. Electric machine tool according to Claim 1 or 2, **characterized in that** the covering element (112) is a pot-shaped housing cover.

4. Electric machine tool according to one of the preceding claims, **characterized in that** the brush cover (132, 134) is fixed to the motor housing (110) in the operating position by means of a form fit between the covering element (112) and a first end region of the brush cover (132, 134).

5. Electric machine tool according to Claim 4, **characterized in that** the motor housing (110) has an engagement element (210), into which a second end region of the brush cover (132, 134) engages releasably.

6. Electric machine tool according to Claim 4, **characterized in that** the brush cover (132, 134) is fastened pivotably to the motor housing (110) at the second end region.

7. Electric machine tool according to one of the preceding claims, **characterized in that** the covering element (112) has at least one holding member (204) which engages into a holding device (280) provided on the motor housing (110), the holding member (204) and the holding device (280) forming a limit stop which, when the releasable connection between the covering element (112) and motor housing (110) is released, limits a movement of the covering element (112) for freeing the brush cover (132, 134).

8. Electric machine tool according to Claim 7, **characterized in that** a spring element (320) is provided, which prestresses the covering element (112) in the direction of the limit stop.

9. Electric machine tool according to Claim 7 or 8, **characterized in that** the holding member (204) has at least one latching nose (330) and the holding device (280) is a collar-shaped stop.

## Revendications

1. Machine-outil électrique comprenant un moteur à collecteur qui présente un arbre de moteur (18) monté à rotation dans un carter de moteur (110) avec un collecteur (106), auquel sont associés au moins deux balais de collecteur (122, 124), qui sont accessibles par le biais d'au moins un recouvrement de balai (132, 134) prévu sur le carter de moteur (110), **caractérisée en ce qu'**un élément de recouvrement (112) enveloppe au moins en partie le carter de moteur (110) et est fixé au carter de moteur (110) par le biais d'une connexion détachable, l'élément de recouvrement (112) présentant au moins un évidement (142, 144) dans lequel est disposé le recouvrement de balai (132, 134), le recouvrement de balai (132, 134) étant fixé dans une position fonctionnelle au carter de moteur (110) par la fixation de l'élément de recouvrement (112) au carter de moteur (110), dans laquelle position fonctionnelle les balais de collecteur (122, 124) sont recouverts par le recouvrement de balai (132, 134) de telle sorte que les balais de collecteur (122, 124) ne soient pas accessibles de l'extérieur.

2. Machine-outil électrique selon la revendication 1, **caractérisée en ce qu'**un organe de ressort (410) est prévu, lequel sert à précontraindre le recouvrement de balai (132, 134) dans la direction d'une position d'entretien dans laquelle un accès aux balais de collecteur (122, 124) est possible.

3. Machine-outil électrique selon la revendication 1 ou 2, **caractérisée en ce que** l'élément de recouvrement (112) est un recouvrement de boîtier en forme de pot.

4. Machine-outil électrique selon l'une quelconque des revendications précédentes, **caractérisée en ce que** le recouvrement de balai (132, 134) est fixé dans la position fonctionnelle au carter de moteur (110) par un engagement par correspondance de forme entre l'élément de recouvrement (112) et une première région d'extrémité du recouvrement de balai (132, 134).

5. Machine-outil électrique selon la revendication 4, **caractérisée en ce que** le carter de moteur (110) présente un élément d'engagement (210) dans lequel s'engage de manière détachable une deuxième région d'extrémité du recouvrement de balai (132, 134).

6. Machine-outil électrique selon la revendication 4, **caractérisée en ce que** le recouvrement de balai (132, 134) est fixé de manière pivotante au carter de moteur (110) au niveau de la deuxième région d'extrémité.

7. Machine-outil électrique selon l'une quelconque des revendications précédentes, **caractérisée en ce que** l'élément de recouvrement (112) présente au moins un organe de retenue (204) qui s'engage dans un dispositif de retenue (280) prévu sur le carter de moteur (110), l'organe de retenue (204) et le dispositif de retenue (280) formant une butée de fin de course qui, lors du détachement de la connexion détachable entre l'élément de recouvrement (112) et le carter de moteur (110), limite un mouvement de l'élément de recouvrement (112) pour libérer le recouvrement de balai (132, 134).

8. Machine-outil électrique selon la revendication 7, **caractérisée en ce qu'**un élément de ressort (320) est prévu, lequel précontraint l'élément de recouvrement (112) dans la direction de la butée de fin de course.

9. Machine-outil électrique selon la revendication 7 ou 8, **caractérisée en ce que** l'organe de retenue (204) présente au moins un ergot d'encliquetage (330) et le dispositif de retenue (280) est une butée en forme de collerette.
